# FASCICULE DE BREVET EUROPEEN

(11) **EP 1 590 205 B1**
(45) Date de publication et mention de la délivrance du brevet: **14.06.2006**
(21) Numéro de dépôt: 04708787.9
(22) Date de dépôt: 06.02.2004
(51) Int. Cl.: B60R 7/04

(54) **CONSOLE POUR HABITACLE DE VEHICULE**
KONSOLE FÜR FAHRZEUGKABINE
CONSOLE FOR A VEHICLE CABIN

(30) Priorité: 07.02.2003 FR 0301646
(43) Date de publication de la demande: 02.11.2005
(73) Titulaire: Renault s.a.s., 92100 Boulogne Billancourt (FR)
(72) Inventeur: BERTHOLON, Patrick, F-92310 Sévres (FR); FEYEL, Marie-Claire, F-78000 Versailles (FR); MOUANGUE, Serge, F-78420 Carrières sur Seine (FR); PANHELLEUX, Jérôme, F-75015 Paris (FR)
(86) Numéro de dépôt international: PCT/FR2004/000275
(87) Numéro de publication internationale: WO 2004/071813

(56) Documents cités:
- DE-A- 19 646 809
- US-A- 6 116 674
- US-A- 6 135 529

## Description

La présente invention se rapporte à une console pour habitacle de véhicule, en particulier à une console coulissante.

Il est connu de proposer un véhicule avec une console qui présente un compartiment de stockage et qui est mobile dans l'habitacle selon des moyens de guidage entre une position avant et une position arrière.

Une console coulissante selon le préambule de la revendication 1 est décrite dans le brevet US 6 203 088. Cette console comporte un couvercle de compartiment servant d'accoudoir et monté pivotant vers l'arrière sur une charnière. Le couvercle peut gêner l'accès direct au contenu du compartiment et gêner la manipulation de la console entre sa position avant et arrière, pour un usager d'un siège arrière comme pour un usager d'un siège avant, quelle que soit la position de la console entre la position avant ou la position arrière. Une autre console coulissante connue présente un couvercle avant et un couvercle arrière montés pivotant sur une charnière respectivement vers l'avant et vers l'arrière. Les couvercles peuvent aussi gêner l'accès direct au contenu du compartiment et gêner la manipulation de la console entre sa position avant et arrière. Un besoin constant d'amélioration de l'aisance d'accès à un compartiment et de manipulation en coulissement d'une console pour habitacle de véhicule peut donc être constaté.

Le but de l'invention est d'améliorer une console coulissante pour habitacle de véhicule.

Dans ce but, l'invention propose une console pour habitacle de véhicule, la console définissant un compartiment accessible par un usager à travers un orifice ménagé dans une région supérieure de la console, la console comportant un accoudoir mobile pouvant être placé au moins dans une première position d'utilisation selon un plan sensiblement horizontal au dessus de l'orifice, la console étant mobile selon des moyens de guidage entre une position avant et une position arrière dans l'habitacle, l'accoudoir étant fixé à la console par l'intermédiaire d'un support dans lequel est ménagé une poignée définissant une portion de préhension à travers laquelle la poignée est prévue pour être saisie par un usager pour manipuler la console selon les moyens de guidage.

Avantageusement, la console selon l'invention est facile à manipuler par un quelconque utilisateur, malgré la présence de l'accoudoir mobile.

Une surface supérieure de la poignée peut être sensiblement coplanaire avec une surface supérieure de l'accoudoir placé dans la première position.

Le niveau d'une surface supérieure de la région supérieure de la console à proximité de la poignée peut être situé au dessous de la portion de préhension.

Un axe de rotation de l'accoudoir peut traverser la poignée.

Un axe de rotation de l'accoudoir peut traverser la portion de préhension.

La poignée peut être une arche.

En correspondance avec la portion de préhension, une face interne de la poignée peut présenter un organe de commande de déverrouillage du coulissement de la console.

La console peut comporter un élément d'obturation de l'orifice distinct de l'accoudoir, l'accoudoir pouvant être placé dans au moins une deuxième position dans laquelle il dégage au moins partiellement l'orifice.

L'élément d'obturation peut être un rideau.

L'accoudoir peut comprendre une échancrure d'accès à l'orifice délimitée par au moins un corps de l'accoudoir et un pied de raccordement à pivotement de l'accoudoir sur le support.

L'échancrure peut dégager préférentiellement un accès à la portion de préhension.

L'accoudoir peut comprendre une fente longitudinale qui le divise en deux parties adaptées à être utilisées par des usagers situés de chaque côté de la console.

L'invention concerne aussi un véhicule comprenant une console selon l'invention. La console peut être une console centrale.

La présente invention va maintenant être décrite par un exemple de réalisation non limitatif, en liaison avec les dessins annexés sur lesquels :
- la figure 1 est vue schématique en deux dimensions d'une console selon l'invention implantée dans un habitacle de véhicule.
- la figure 2 est vue schématique en trois dimensions d'une console selon l'invention implantée dans un habitacle de véhicule.
- la figure 3 est un éclaté d'une console selon l'invention.
- la figure 4 est une vue arrière du montage de l'accoudoir,
- la figure 5 est une vue arrière d'un variante de montage de l'accoudoir.

Selon l'invention, comme représenté sur les figures, un véhicule 1 présente un habitacle 2 avec une console coulissante 10 à l'arrière d'une planche de bord 7. L'habitacle comporte par exemple deux sièges avant 3 sur une première rangée et deux sièges arrière 5 sur une deuxième rangée. La deuxième rangée peut comporter une banquette.

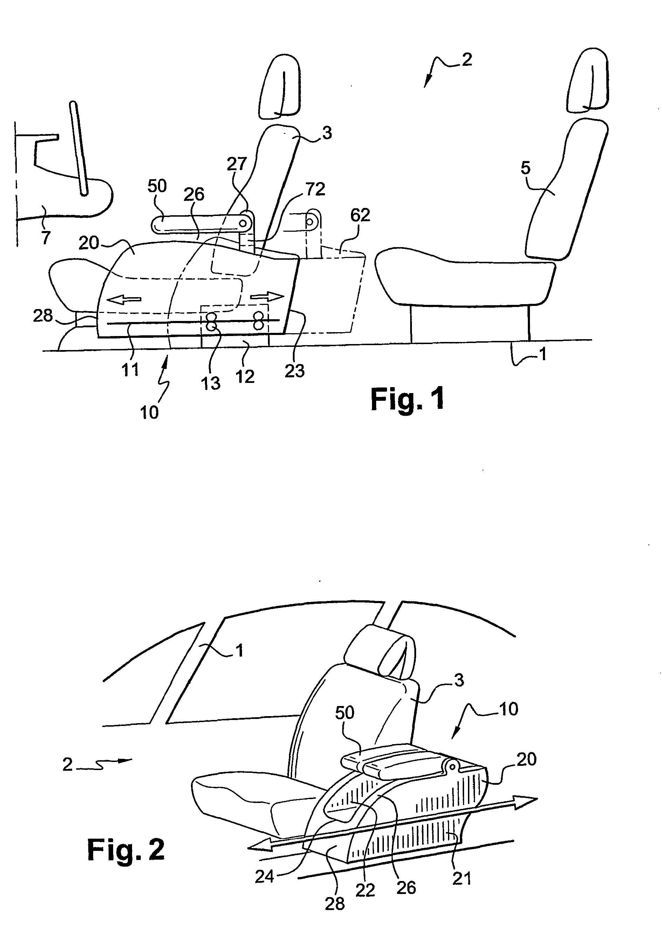

La console 10 est montée coulissante selon des moyens de guidage, entre une position dite avant comme représenté en trait plein à la figure 1 et une position dite arrière, à proximité des sièges arrières, comme représenté en traits mixtes à la figure 1. Les moyens de guidage de la console comportent des moyens mobiles par rapport au véhicule et des moyens fixes par rapport au véhicule. Les moyens de guidage déterminent une trajectoire déterminée de la console 10 dans l'habitacle 2, ici une trajectoire rectiligne d'avant en arrière.

Les moyens de guidage de la console 10 des rails 11 mobiles, internes à la console, solidaires d'un corps 20 de la console et montés coulissants par l'intermédiaire de roulettes 13 sur un chariot 12 fixe par rapport au plancher du véhicule. Les roulettes 13 sont solidaires du chariot 12. Un exemple de réalisation de moyens de guidage en translation d'une console est décrit de façon détaillé dans la demande de brevet EP 1 179 449. En variante non représentée, les rails sont fixes par rapport au plancher et le chariot avec les roulettes est intégré à la console qui roule sur les rails.

La console 10 selon l'invention comporte aussi un mécanisme (non représenté) de verrouillage électrique de rail 11 par rapport au chariot 12, avec un organe de commande de déverrouillage tel qu'un interrupteur à actionner par un utilisateur pour autoriser le coulissement de la console 10.

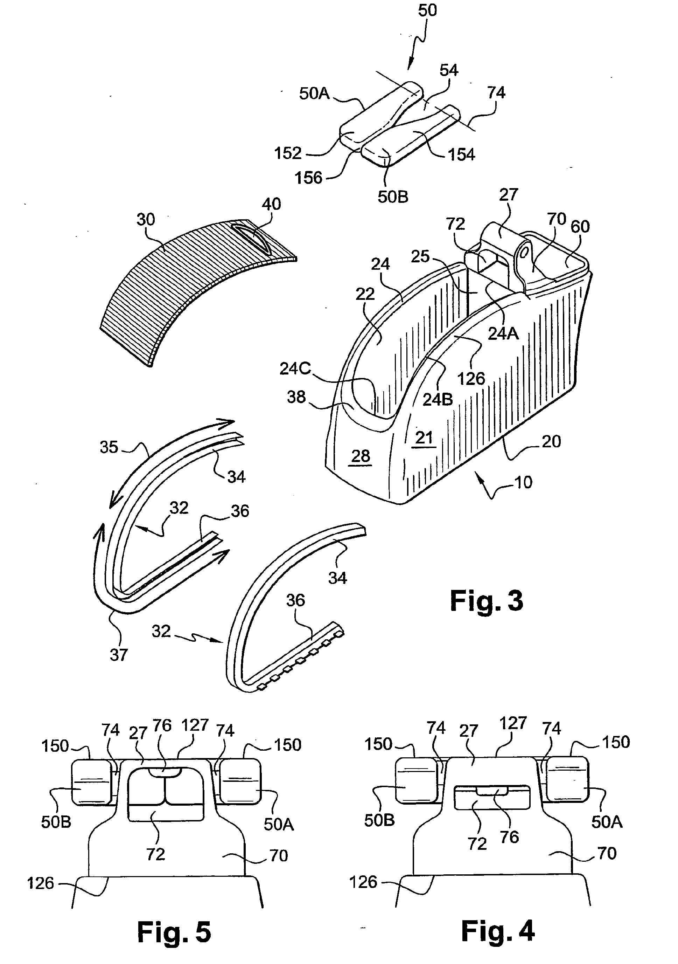

Dans l'exemple représenté, la console 10 comporte deux faces latérales longitudinales 21 sensiblement verticales, une face transversale avant 28 sensiblement verticale dans sa partie inférieure à proximité du plancher du véhicule, une face transversale arrière 23 inclinée de bas en haut vers l'arrière et une face supérieure 26 raccordée au haut des faces latérales et transversales. Le corps 20 présente une paroi interne verticale 25 (figure 3) située aux deux tiers de la longueur de la console 10, vers l'arrière.

Les génératrices de la face supérieure 26 sont, en allant de la face avant 28 vers la paroi interne 25, selon une directrice courbe, le rayon de courbure de la directrice allant croissant. A proximité de la paroi interne 25, la face supérieure 26 est tangente à un plan sensiblement horizontal, par exemple tangente à un plan incliné de quelques degrés vers le bas et vers la face arrière 23. La face supérieure 26 est sensiblement verticale à son raccordement avec la face transversale avant 28. Dans l'exemple représenté, la face supérieure 26 présente un sommet à mi longueur de la console 10. Dans l'exemple représenté, une portion frontale de la face supérieure 26 est la portion de la face supérieure 26 comprise entre la génératrice raccordée à la face avant 28 et une génératrice située à environ au tiers avant de la console 10. De façon générale, la région frontale de la console est une région avant de la console où une embouchure d'un orifice ménagé dans une face de cette région est inclinée vers l'avant, l'orifice ménageant un accès par l'avant. En ménageant l'orifice dans une face d'une région frontale, un utilisateur peut accéder au contenu du compartiment en passant la main dans l'orifice, perpendiculairement à l'embouchure de l'orifice dans la région, selon une direction inclinée, par exemple selon une direction inclinée de 15 degré à 90 degré par rapport à la verticale, vers l'avant pour une face frontale avant.

Un compartiment avant 22 de rangement est aménagé dans le corps 20. Un bac intérieur non représenté sur les figures est monté dans le corps pour délimiter le compartiment 22, entre les faces latérales 21, la face transversale avant 28 et la paroi interne verticale 25. La face supérieure 28 du corps est découpée pour ménager un orifice 24 d'accès au compartiment 22 par le haut.

L'orifice 24 est donc délimité par une embouchure comportant un segment arrière 24A horizontal à l'extrémité supérieure de la paroi interne 25, vers l'avant par un segment curviligne 24B supérieur raccordé à chaque extrémité du segment arrière 24A et, à l'avant, un segment avant 24C recourbé vers le bas et raccordé à chacune de ses extrémités aux segments curvilignes 24B. Un rebord avant 38 sensiblement horizontal est formé sur la tranche de la face transversale avant 28, entre la surface externe de la face avant et le segment 24C avant de l'embouchure. De même, un rebord vertical est formé sur la tranche de la face supérieure 26, entre la surface externe de la face supérieure et les segments curviligne 24B de l'embouchure.

La console 10 comporte une poignée 27 sous forme d'arche posée sur la face supérieure 26. La poignée 27 est posée en saillie par rapport à la face supérieure, c'est à dire au dessus du niveau de la face supérieure 26 à proximité de la poignée, à l'arrière par rapport la paroi interne 25.

L'orifice 24 est muni d'un organe de fermeture du compartiment 22, en l'espèce un rideau 30 (figure 3). Le rideau 30 est monté coulissant entre des glissières longitudinales de guidage 32.

Dans l'exemple représenté, au moins un segment curviligne des glissières 32 est en correspondance avec les segments curvilignes 24B de l'embouchure, au moins une partie de l'orifice 24 étant définie entre le segment curviligne des glissières 32. Le rideau 30 est prévu pour suivre le segment curviligne des glissières 32. La partie d'orifice 24 définie entre le segment curviligne des glissières 32 présente une portion qui s'étend vers le bas dans une région frontale de la console pour un accès aisé au compartiment par l'avant

Le rideau 30 est mobile entre une position d'accès et une position d'obturation. Il s'ouvre de l'arrière vers l'avant de la console. Une manette 40 est prévue pour son maniement manuel par un utilisateur. La manette 40 est intégrée à une lamelle du rideau, en saillie par rapport à une couche supérieure souple reliant les lamelles du rideau 30 et formant une feuille continue. Le rideau peut être constitué de lamelles reliées entre elles d'autres moyens qu'une couche souple. Il peut être constitué seulement par une feuille continue de rigidité appropriée.

Chaque glissière de guidage 32 présente une portion supérieure 34 (matérialisée par une flèche 35 à la figure 3) sensiblement en correspondance de l'orifice 24 et une portion inférieure 36 (matérialisée par une flèche 37 à la figure 3) située en dessous du niveau de l'extrémité inférieure 38 de l'orifice 24, c'est à dire en dessous du niveau du rebord 38.

Dans la position d'accès, le rideau est escamoté dans la console 10 (figure 2) et l'orifice 24 est complètement ouvert. Le rideau 30 est placé dans la portion inférieure 36 des glissières 32. La manette 40 est en appui sur le rebord 38.

Dans la position d'obturation, le rideau 30 est déployé en continu en correspondance de l'orifice 24. Le rideau 30 est placé dans la portion supérieure 34 des glissières 32.

La console 10 comporte un accoudoir 50 intégré situé au dessus de la face supérieure. L'accoudoir peut être placé dans une première position d'utilisation selon un plan sensiblement horizontal au dessus du rideau, l'accoudoir étant superposé au moins partiellement au rideau. L'accoudoir peut être placé dans au moins une autre position dans laquelle il dégage le rideau. L'accoudoir 50 est mobile à rotation de la première position horizontale avant d'utilisation telle que représenté sur les figures vers une position verticale (non représentée) ou vers une position horizontale arrière (non représentée). L'accoudoir 50 est placé en correspondance d'au moins une portion de la face supérieure de la console 10 et n'interdit pas l'accès au compartiment 22 par la portion de l'orifice située au niveau de la région frontale de la console.

Dans l'exemple représenté, l'accoudoir 50 présente une fente 156 longitudinale qui le divise en deux parties 50A, 50B adaptées à être utilisées par des usagers situés de chaque côté de la console 10. Chaque partie de l'accoudoir 50 est un bras longitudinal 50A pouvant tourner indépendamment de l'autre bras 50B. Dans l'exemple représenté, l'accoudoir 50 comporte une échancrure centrale 54 d'accès à l'orifice 24, à proximité de la poignée 27 sur laquelle est monté l'accoudoir 50.

L'échancrure 54 permet l'accès à l'orifice 24. Elle est délimitée par au moins un corps 152 de chaque bras de l'accoudoir et un pied 154 de raccordement à pivotement de l'accoudoir 50 sur la console, le corps étant situé à l'avant du pied et plus large que le pied.

L'arche formant la poignée 27 est ménagé dans un support 70 servant à la fixation de l'accoudoir 50. Sous l'arche, le support 70 présente un évidement 72 formant une portion de préhension de la poignée 27. La poignée est prévue pour être saisie par un usager pour manipuler la console selon les moyens de guidage en passant la main à travers la portion de préhension 72. Avantageusement, l'échancrure 54 dégage un accès à la portion de préhension 72.

Dans l'exemple représenté à la figure 4, la poignée 27 est ménagée dans le support 70 autour d'un axe 74 de l'accoudoir 50. La portion de préhension 72 est située entre face supérieure 26 à proximité de la poignée 27 et l'axe 74 de l'accoudoir 50, la portion de préhension 72 étant placé au dessus du niveau de l'orifice 24 à proximité de la poignée 27. L'axe de rotation de l'accoudoir 50 traverse la poignée 27.

Quand l'accoudoir 50 est placé dans une position d'utilisation selon un plan sensiblement horizontal au dessus de l'orifice 24, une surface supérieure 127 de la poignée 27 est sensiblement coplanaire avec une surface supérieure 150 de l'accoudoir. Le niveau d'une surface supérieure 126 de la région supérieure de la console à proximité de la poignée 27 est situé au dessous de la portion de préhension 72. Avantageusement pour l'ergonomie de la console, un utilisateur ne risque pas de taper avec son coude dans la poignée 23 car elle n'est pas en saillie de l'accoudoir 50. La poignée peut être en retrait, c'est à dire en dessous du niveau de la surface supérieure de l'accoudoir 50 dans sa position horizontale.

Dans l'exemple représenté à la figure 5, la poignée 27 est ménagée dans le support 70 et l'axe 76 de chaque bras 52 de l'accoudoir 50 est monté sur des parties latérales du support 70, de chaque côté de l'évidement 72. L'axe de rotation de l'accoudoir traverse donc la portion de préhension 72.

Aux figures 4 et 5, l'interrupteur qui forme organe de commande 76 de déverrouillage du coulissement de la console est représenté implanté sur la face inférieure ou interne de la poignée 23, en correspondance avec la portion de préhension 72.

Le montage de l'accoudoir 50 sur le support 70 où est ménagé la poignée 23 est favorable à l'ergonomie de la console 10. En effet, quelle que soit la position de l'accoudoir 50, l'utilisateur peut accéder à la poignée 23 et actionner l'interrupteur 76 pour faire coulisser la console 10, en passant a main soit devant, soit derrière la poignée 23, soit dessus, soit dessous la poignée 23. La présence de l'échancrure 54 facilite l'exécution de certaines manipulations. Les manipulations sont aisées que l'utilisateur soit installé sur la première ou la deuxième rangée de siège, d'autant que dans l'exemple représenté, de la poignée est située à environ un tiers de la longueur de la console, vers l'arrière, et non à l'une de ses extrémités.

Dans l'exemple représenté, le compartiment 22 est situé à l'avant de la console et la région frontale de la console où débouche l'orifice 24 est transversale, à l'avant de la console 10. La console comporte un compartiment arrière 60 avec son propre organe de fermeture, à savoir un couvercle 62 monté à rotation autour d'un axe situé à proximité de la poignée 27, en saillie par rapport à la surface supérieure 126. Le compartiment arrière 60 est destiné à un usage privilégié par un usager arrière.

Avantageusement, quelle que soit la position de l'accoudoir 50 placé sur la console 10, la console selon l'invention permet l'accès au contenu du compartiment 22. De plus, tout en pouvant accéder au contenu du compartiment, le maniement de la console est aisé pour tout usager d'un siège avant comme d'un siège arrière, quelle que soit la position de la console.

Avantageusement, un usager de la console selon l'invention peut accéder au contenu du compartiment en passant la main dans l'orifice vers le bas dans une région frontale de la console, le bras de l'usager étant incliné vers l'arrière pour un usager d'un siège avant voulant attraper un objet du compartiment quand la console est située en position arrière.

Avantageusement, un usager peut d'un seul geste libérer l'accès total au compartiment 22 et accéder au contenu du compartiment 22 en passant la main n'importe où dans l'orifice 24. De même, il peut d'un seul geste condamner complètement l'accès au contenu du compartiment 22. Bien évidemment, l'usager peut aussi positionner le rideau 30 dans diverses positions intermédiaire pour fermer partiellement l'orifice 24.

Même dans la position horizontale avant de l'accoudoir 50, l'utilisateur peut accéder à la manette 40 pour ouvrir partiellement le rideau 30, en correspondance de l'échancrure 54. L'utilisateur peut appliquer la main à plat en appuyant légèrement sur le rideau pour le faire coulisser sans utiliser la manette 40. Avantageusement, avec l'accoudoir 50 dans la position horizontale avant, il est possible de maintenir vertical ou en biais un objet long posé dans le compartiment 22 et maintenu dans l'échancrure 54 de l'accoudoir, en appui sur la poignée 27. De plus, la fente 156 de l'accoudoir 50 permet de maintenir verticalement un objet entre les deux parties de l'accoudoir, pour peu que l'épaisseur de l'objet soit compatible avec la largeur de la fente.

## Revendications

1. Console (10) pour habitacle (2) de véhicule (1), la console définissant un compartiment (22) accessible par un usager à travers un orifice (24) ménagé dans une région supérieure de la console, la console comportant un accoudoir (50) mobile pouvant être placé dans au moins une première position d'utilisation selon un plan sensiblement horizontal au dessus de l'orifice, la console étant mobile selon des moyens de guidage (11, 12, 13) entre une position avant et une position arrière dans l'habitacle, **caractérisée en ce que** l'accoudoir (50) est fixé à la console (10) par l'intermédiaire d'un support (70) dans lequel est ménagé une poignée (27) définissant une portion de préhension (72) à travers laquelle la poignée est prévue pour être saisie par un usager pour manipuler la console selon les moyens de guidage (11, 12, 13).

2. Console selon la revendication 1, **caractérisée en ce qu'**une surface supérieure (127) de la poignée (27) est sensiblement coplanaire avec une surface supérieure (150) de l'accoudoir (50) placé dans la première position.

3. Console selon l'une quelconque des revendications 1 à 2, **caractérisée en ce que** le niveau d'une surface supérieure (126) de la région supérieure de la console (10) à proximité de la poignée (27) est situé au dessous de la portion de préhension (72).

4. Console selon la revendications 3, **caractérisée en ce qu'**un axe de rotation (74) de l'accoudoir (50) traverse la poignée (27) ou la portion de préhension (72).

5. Console selon l'une quelconque des revendications précédentes, **caractérisée en ce que** la poignée (27) est une arche.

6. Console selon l'une quelconque des revendications précédentes, **caractérisée en ce qu'**en correspondance avec la portion de préhension (72), une face interne de la poignée (27) présente un organe (76) de commande de déverrouillage du coulissement de la console (10).

7. Console selon l'une quelconque des revendications précédentes, **caractérisée en ce que** la console (10) comporte un élément d'obturation (30) de l'orifice (24) distinct de l'accoudoir (50), l'accoudoir pouvant être placé dans au moins une deuxième position dans laquelle il dégage au moins partiellement l'orifice, l'élément d'obturation étant préférentiellement un rideau (30).

8. Console selon l'une quelconque des revendications précédentes, **caractérisée en ce que** l'accoudoir (50) comprend une échancrure (54) d'accès à l'orifice (24) délimitée par au moins un corps (152) de l'accoudoir et un pied (154) de raccordement à pivotement de l'accoudoir (50) sur le support (70), l'échancrure (54) dégageant préférentiellement un accès à la portion de préhension (72).

9. Console selon l'une quelconque des revendications précédentes, **caractérisée en ce que** l'accoudoir (50) comprend une fente (156) longitudinale qui le divise en deux parties (50A, 50B) adaptées à être utilisées par des usagers situés de chaque côté de la console (10).

10. Véhicule (1) **caractérisé en ce qu'**il comprend une console (10) selon l'une quelconque des revendications précédentes, la console (10) étant préférentiellement une console centrale.

## Claims

1. A console (10) for the passenger space (2) of a vehicle (1), the console defining a compartment (22) which can be accessed by a user via an opening (24) provided in an upper region of the console, the console comprising a movable elbow rest (50) which may be disposed in at least a first position of use in a substantially horizontal plane above the opening, wherein the console may be moved along guide means (11, 12, 13) between a forward position and a rear position in the passenger space, **characterised in that** the elbow rest (50) is secured to the console (10) by means of a support (70) in which a handle (27) is provided and defines a gripper portion (72) via which the handle is adapted to be grasped by a user in order to manipulate the console along the guide means (11, 12, 13).

2. A console as claimed in claim 1, **characterised in that** an upper surface (127) of the handle (27) is substantially coplanar with an upper surface (150) of the elbow rest (50) disposed in the first position.

3. A console as claimed any one of claims 1 to 2, **characterised in that** the level of an upper surface (126) of the upper region of the console (10) in the vicinity of the handle (27) is disposed below the gripper portion (72).

4. A console as claimed in claim 3, **characterised in that** an axis of rotation (74) of the elbow rest (50) passes through the handle (27) or the gripper portion (72).

5. A console as claimed in any one of the preceding claims, **characterised in that** the handle (27) is an arch.

6. A console as claimed in any one of the preceding claims, **characterised in that**, corresponding with the gripper portion (72), an inner surface of the handle (27) comprises a member (76) controlling the unlocking of the sliding of the console (10).

7. A console as claimed in any one of the preceding claims, **characterised in that** the console (10) comprises a closure member (30) of the opening (24) which is separate from the elbow rest (50), wherein the elbow rest may be disposed in at least a second position in which it at least partially frees the opening, the closure member preferably being a screen (30).

8. A console as claimed in any one of the preceding claims, **characterised in that** the elbow rest (50) comprises an indentation (54) for access to the opening (24) bounded by at least one body (152) of the elbow rest and a foot (154) connecting the elbow rest (50) in a pivoting manner to the support (70), the indentation (54) preferably freeing access to the gripper portion (72).

9. A console as claimed in any one of the preceding claims, **characterised in that** the elbow rest (50) comprises a longitudinal slot (156) which divides it into two portions (50A, 50B) adapted to be used by users on each side of the console (10).

10. A vehicle (1) **characterised in that** it comprises a console (10) as claimed in any one of the preceding claims, the console (10) preferably being a central console.

## Patentansprüche

1. Konsole (10) für eine Fahrgastzelle (2) eines Fahrzeugs (1), wobei die Konsole ein Fach (22) definiert, welches für einen Benutzer durch eine Öffnung (24) zugänglich ist, die in einem oberen Bereich der Konsole eingerichtet ist, wobei die Konsole eine bewegliche Armlehne (50) aufweist, welche in mindestens eine Verwendungsposition gemäß einer im Wesentlichen horizontalen Ebene über die Öffnung gesetzt werden kann, wobei die Konsole gemäß Führungsmitteln (11, 12, 13) zwischen einer vorderen Position und einer hinteren Position in der Fahrgastzelle beweglich ist, **dadurch gekennzeichnet, dass** die Armlehne (50) an der Konsole (10) über einen Träger (70) befestigt ist, in welchem ein Handgriff (27) eingerichtet ist, der einen Greifabschnitt (72) definiert, durch welchen hindurch es vorgesehen ist, dass der Handgriff durch einen Benutzer ergriffen wird, um die Konsole gemäß den Führungsmitteln (11, 12, 13) zu handhaben.

2. Konsole nach Anspruch 1, **dadurch gekennzeichnet, dass** eine obere Oberfläche (127) des Handgriffs (27) im Wesentlichen koplanar mit einer oberen Oberfläche (150) der Annlehne (50) ist, welche in die erste Position gesetzt ist.

3. Konsole nach irgendeinem der Ansprüche 1 bis 2, **dadurch gekennzeichnet, dass** das Niveau einer oberen Oberfläche (126) des oberen Bereichs der Konsole (10) in der Nähe des Handgriffs (27) unter dem Greifabschnitt (72) liegt.

4. Konsole nach Anspruch 3, **dadurch gekennzeichnet, dass** eine Drehachse (74) der Armlehne (50) den Handgriff (27) oder den Greifabschnitt (72) durchquert.

5. Konsole nach irgendeinem der vorangegangenen Ansprüche, **dadurch gekennzeichnet, dass** der Handgriff (27) ein Bogen ist.

6. Konsole nach irgendeinem der vorangegangenen Ansprüche, **dadurch gekennzeichnet, dass** eine Innenseite des Handgriffs (27) in Übereinstimmung mit dem Greifabschnitt (72) ein Betätigungsbauteil (76) zur Entriegelung des Gleitens der Konsole (10) aufweist.

7. Konsole nach irgendeinem der vorangegangenen Ansprüche, **dadurch gekennzeichnet, dass** die Konsole (10) ein Element (30) zum Verschließen der Öffnung (24) verschieden von der Armlehne (50) aufweist, wobei die Armlehne in mindestens eine zweite Position gesetzt werden kann, in welcher sie mindestens teilweise die Öffnung freigibt, wobei das Element zum Verschließen vorzugsweise ein Vorhang (30) ist.

8. Konsole nach irgendeinem der vorangegangenen Ansprüche, **dadurch gekennzeichnet, dass** die Armlehne (50) eine Aussparung (54) für einen Zugang zu der Öffnung (24) aufweist, welche durch mindestens einen Körper (152) der Armlehne und einen Fuß (154) für die Schwenkverbindung der Armlehne (50) an dem Träger (70) begrenzt wird, wobei die Aussparung (54) vorzugsweise einen Zugang zu dem Greifabschnitt (72) freigibt.

9. Konsole nach irgendeinem der vorangegangenen Ansprüche, **dadurch gekennzeichnet, dass** die Armlehne (50) einen longitudinalen Spalt (156) aufweist, welcher sie in zwei Teile (50A, 50B) unterteilt, die angepasst sind, von Benutzern verwendet zu werden, welche sich auf jeder Seite der Konsole (10) befinden.

10. Fahrzeug (1), **dadurch gekennzeichnet, dass** es eine Konsole (10) nach irgendeinem der vorangegangenen Ansprüche aufweist, wobei die Konsole (10) vorzugsweise eine Mittelkonsole ist.
